# FASCICULE DE BREVET EUROPEEN

(11) **EP 1 231 867 B1**
(45) Date de publication et mention de la délivrance du brevet: **21.09.2005**
(21) Numéro de dépôt: 00985331.8
(22) Date de dépôt: 27.11.2000
(51) Int. Cl.: A61C 15/00, A61C 15/02, A61C 17/00

(54) **INSTRUMENT POUR LE NETTOYAGE ET LE POLISSAGE DE LA SURFACE DES DENTS SE PRESENTANT SOUS LA FORME D'UN BATONNET**
STIFTFÖRMIGES WERKZEUG ZUM REINIGEN UND SCHLEIFEN DER OBERFLÄCHE DER ZÄHNE
INSTRUMENT FOR CLEANING AND POLISHING THE SURFACE OF TEETH IN THE FORM OF A STICK

(30) Priorité: 26.11.1999 EP 99440327
(43) Date de publication de la demande: 21.08.2002
(73) Titulaire: Bachmann, Marc William, 34190 Ganges (FR); Bachmann, Sonia, 34190 Ganges (FR)
(72) Inventeur:
(74) Mandataire: Noel, Chantal Odile
(86) Numéro de dépôt international: PCT/FR2000/003302
(87) Numéro de publication internationale: WO 2001/037759

(56) Documents cités:
- EP-A- 0 425 357
- US-A- 3 698 388
- US-A- 3 775 848
- US-A- 4 462 136
- PATENT ABSTRACTS OF JAPAN vol. 1999, no. 12, 29 octobre 1999 (1999-10-29) & JP 11 192246 A (LION CORP), 21 juillet 1999 (1999-07-21)

## Description

La présente invention a pour objet un instrument d'hygiène de nettoyage et de polissage de la surface des dents et des matériaux composites d'obturation dentaire, également appelé polissoir, destiné tant à l'usage des particuliers que des praticiens de l'art dentaire.

Un instrument selon le préambule de la revendication 1 est connu du document US-A-4 462 136.

On sait qu'une maintenance correcte de la denture consiste à éliminer quotidiennement de la surface des dents et des espaces interdentaires la plaque dentaire et les débris alimentaires par un brossage soigneux, complété par l'utilisation d'instruments à usage unique tels que des bâtonnets interdentaires en bois, en matière plastique ou en plume d'oiseau, des petites brosses monotouffes, des goupillons ou encore du fil dentaire.

Toutefois ces instruments ne sont pas satisfaisants, en effet :
- les bâtonnets, familièrement appelés cure-dents, en bois ou en plume d'oiseau sont anti-hygiéniques, ils se cassent facilement, et ils sont traumatisants pour la gencive; en matière plastique, ils sont à la fois trop épais et trop flexibles et ne passent pas facilement entre les dents,
- le fil dentaire, en soie ou en Nylon, est efficace mais a du mal à franchir le point de contact des dents si celles-ci sont trop serrées, et il s'effiloche et reste coincé entre les dents, provoquant une gène immédiate,
- les brossettes et les goupillons ne peuvent être utilisés lorsque les espaces interdentaires sont étroits, et leur coût élevé est un obstacle à leur usage régulier.

Les professionnels de l'art dentaire, dentistes et hygiénistes, doivent quant à eux éliminer les dépôts, taches et colorations disgracieuses de la surface des dents et disposent, pour le nettoyage et le polissage des dents et de leurs obturations, d'une vaste panoplie d'instruments et de dispositifs tels que des brossettes rotatives, des instruments à détartrer, des instruments à ultrasons, des aéropolisseurs, ou encore des bandes ou des disques abrasifs.

Toutefois ces instruments présentent les inconvénients suivants :
- les brosses rotatives, utilisées avec une poudre nettoyante, possèdent un pouvoir abrasif très important qui conduit à une abrasion excessive des surfaces dentaires en relief,
- les instruments à détartrer en acier inoxydable agissent uniquement au point de contact de la dent et de leur arête vive et sont d'une utilisation astreignante en temps et en attention, ce qui entraîne un coût élevé pour un travail bien fait,
- les instruments à ultrasons ont une extrémité trop épaisse qui ne permet pas d'aller dans les anfractuosités,
- les aéropolisseurs qui travaillent comme une microsableuse par projection d'une poudre à vitesse supersonique, ce qui dépolit l'émail, demandent un repolissage soigneux des dents avec une poudre adaptée faute de quoi celles-ci se resalissent très vite sur toute leur surface,
- les bandes abrasives, en tissu ou en matière plastique recouvert d'un abrasif collé, introduites entre les dents et animées d'un mouvement de va-et-vient sont censées polir les faces proximales des dents, ce qui oblige le praticien à tenir la bande entre deux doigts à chacune de ses extrémités dans la cavité buccale : cette situation malcommode ne permet pas de guider correctement ladite bande et de lui faire épouser la surface proximale. De plus, lors de ce mouvement, si cette bande extrêmement fine vient en contact avec la gencive, elle peut la couper comme le ferait un rasoir, et, enfin, elle perd très vite sa couche abrasive qui se décolle déjà en franchissant le point de contact des dents si celles-ci sont serrées,
- les disques abrasifs, montés sur des instruments rotatifs, sont des disques de petit diamètre en matière plastique recouvert d'un matériau abrasif qui coupent la gencive et ne peuvent pénétrer l'espace interdentaire.

Enfin, dans un cabinet dentaire la difficulté, lors de la finition et du polissage d'obturations en matériaux composites, réside dans la réalisation d'un joint dent-composite sans débordement et parfaitement poli. Là encore, il y a un problème d'accès et d'instrumentation plus ou moins adaptée, imparfaite et de ne donnant pas totalement satisfaction.

L'instrument ou polissoir pour le nettoyage de la surface des dents et des espaces interdentaires selon l'invention se présente sous la forme d'un bâtonnet et se caractérise essentiellement en ce que la structure du bâtonnet est constituée de fibres et/ou une charge de particules enrobées dans une matrice résineuse, ladite structure conférant à la surface de travail du bâtonnet un pouvoir abrasif continuel.

Dans un premier mode de réalisation de l'invention la structure du bâtonnet est réalisée uniquement à partir de fibres abrasives enrobées dans une matrice résineuse.

Dans un deuxième mode de réalisation de l'invention la structure du bâtonnet est réalisée à partir de fibres abrasives et d'une charge de particules abrasives, la fonction abrasive créée par les fibres ou par les particules pouvant être semblable ou différente selon le choix desdites fibres et desdites particules.

Dans un troisième mode de réalisation de l'invention la structure du bâtonnet est réalisée à partir de fibres non abrasives et de particules abrasives enrobées dans une matrice résineuse, lesdites fibres assurant en particulier la solidité du matériau.

Dans un quatrième mode de réalisation de l'invention la structure du bâtonnet est constituée d'une charge de particules abrasives enrobées dans une matrice en résine polymère.

La structure du bâtonnet peut comporter en outre un noyau métallique, en résine ou en matériau composite, de même nature ou de nature différente des fibres et/ou des particules abrasives et/ou de la matrice résineuse formant ledit bâtonnet, de même couleur ou non.

Les particules de la charge permettent, selon leur nature, leur forme, leur dimension ou/et leur quantité, de faire varier l'effet abrasif de l'instrument ou polissoir, celles-ci ayant de préférence une dureté comprise entre 3 et 10 sur l'échelle MOHS et une taille comprise entre 2 et 25 microns. Elles pourront être de la même taille ou de taille différente de manière à diminuer les vides interstitiels entre elles et à favoriser la régularité de l'effet abrasif. La charge desdites particules pourra varier de 10 à 70% en poids dans la résine.

Les particules de la charge incorporées dans la résine lors du processus de fabrication de l'instrument ou polissoir, par extrusion, coextrusion, ou moulage par compression, compression-transfert, injection ou pultrusion, permettent d'obtenir la viscosité recherchée pour favoriser le glissement de la résine en cours de polymérisation dans les filières ou dans les moules. Les particules de la charge peuvent être réalisées selon le mode de réalisation de l'instrument ou polissoir selon l'invention que l'on veut obtenir :
- d'une part en matériaux à pouvoir abrasif tels que le carbonate de calcium, l'argile calcinée, la silice, les microsphères de verre ou de céramique, l'oxyde d'aluminium, tel que l'alumine ou encore le corindon, l'oxyde d'étain, l'oxyde de cérium et leurs mélanges et analogues.
- d'autre part en matériaux qui ne possèdent pas de pouvoir abrasif mais qui ont une fonction d'adoucissement de l'effet abrasif procuré par les fibres tels que l'argile ou le kaolin sous forme hydratée, le talc, ou encore la poudre de Téflon,
- ou un mélange des deux types de matériaux précédents.

Conformément à l'invention les fibres peuvent être continues au discontinues, parallèles ou non, ou assemblées par exemple sous forme de torsades, de tresses ou de mailles.

Toujours conformément à l'invention la proportion en volume de fibres sera de préférence de 45 à 65% et lesdites fibres seront de préférence des fibres de verre, et notamment des fibres de verre du type AR, et le plus préférablement des fibres de verre enrichi à l'oxyde de zirconium, des fibres de quartz, des fibres de silice, des fibres de carbone ou des fibres synthétiques, de préférence des fibres d'aramide telles que des fibres de Kevlar®, et auront un diamètre compris de préférence entre 2 et 25 microns.

Dans un premier mode de réalisation préféré, les fibres sont des fibres en verre enrichi à l'oxyde de zirconium. Ces fibres confèrent à l'instrument ou polissoir de l'invention une très bonne résistance aux agents acides et alcalins et rendent ledit instrument ou polissoir détectable par un rayonnement électromagnétique et en particulier par les rayons X, c'est-à-dire par une simple radiographie médicale classique.

Dans un second mode de réalisation préféré, les fibres seront des fibres d'aramide, par exemple de Kevlar®, qui permettent de donner à la surface de travail, c'est-à-dire la surface polissante de l'instrument ou polissoir de l'invention une texture de feutre. Dans ce cas, les fibres d'aramide n'ont pas de fonction de polissage mais la fonction de donner une texture feutrée à la surface de polissage du polissoir de l'invention et également elles servent en tant que squelette rigide pour le polissoir de l'invention. Il est donc ici nécessaire d'ajouter des poudres abrasives dans la matrice de résine du polissoir de l'invention. Des poudres abrasives de polissage préférées sont des poudres de matériaux inorganiques tels que l'oxyde d'étain ou l'oxyde de cérium ou l'alumine et leurs mélanges et analogues.

La matrice résineuse sera réalisée à partir de résines polymères thermodurcissables ou thermoplastiques et, de préférence, à partir de résines époxy ou de résines polyester.

L'instrument ou polissoir selon l'invention pourra comprendre en outre des agents de traitement de surface tels que des titanates, des zirconates ou de préférence des silanes, de manière à favoriser l'adhésion des particules à la résine.

La structure de l'instrument ou polissoir selon la présente invention permet ainsi de lui procurer la finesse requise pour accéder aux espaces interdentaires les plus étroits, sans risque de fracture et sans danger pour les dents ou le parodonte, ainsi que toutes les formes souhaitées pour épouser les surfaces dentaires au plus près.

En outre la structure de l'instrument ou polissoir selon l'invention lui procure un pouvoir abrasif permanent, car les agents abrasifs font partie intégrante de sa structure et, au fur et à mesure de l'usure dudit instrument ou polissoir, la surface de travail de ce dernier comporte toujours de nouvelles sections de fibres et/ou de particules qui assurent sa fonction abrasive.

Enfin sa structure lui permet d'être lavé, décontaminé ou stérilisé et en fait un instrument parfaitement adapté aux impératifs d'hygiène et de biocompatibilité pour son usage dans le milieu buccal.

L'instrument ou polissoir selon la présente invention permet pour les professionnels de l'art dentaire un gain de temps et d'efficacité important et pour les patients, plus de confort pour un résultat optimum, sans atteinte de l'intégrité dentaire et à moindre coût.

Les avantages et les caractéristiques de la présente invention ressortiront plus clairement de la description qui suit et qui se rapporte au dessin annexé, lequel en représente un mode de réalisation non limitatif.
- la figure 1A est une vue de profil d'un instrument de nettoyage ou polissoir des dents selon l'invention selon une forme particulière,
- la figure 1B est une vue de profil3 d'un instrument de nettoyage ou polissoir des dents selon l'invention selon une autre forme particulière,
- la figure 1C est une vue de profil d'un instrument de nettoyage ou polissoir des dents selon l'invention selon une autre forme particulière,
- la figure 1D est une vue en coupe transversale de l'extrémité de travail de l'instrument représenté en figure 1C,
- la figure 2 représente une vue en coupe transversale de l'instrument de nettoyage ou polissoir des dents selon la présente invention dans un mode de réalisation préférentiel de sa structure inteme représentée partiellement.

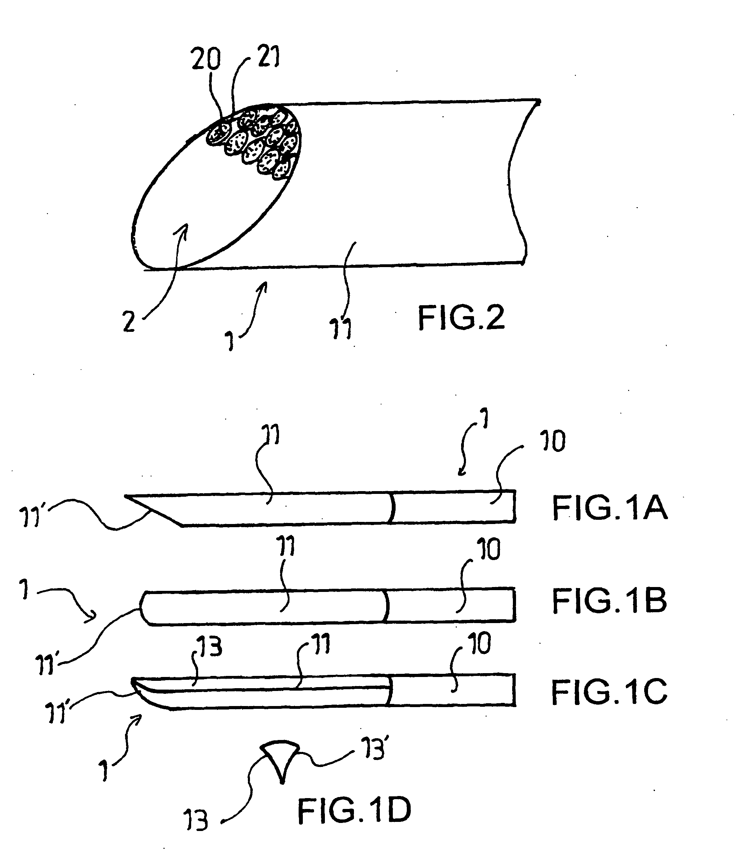

Si on se réfère aux figures 1A, 1B et 1C on peut voir qu'un instrument de nettoyage ou polissoir des dents selon la présente invention se présente sous la forme d'un bâtonnet 1 comprenant un manche 10 pour sa préhension et une partie 11 comportant une extrémité de travail 11' permettant notamment de polir la surface des dents. Le manche 10 et la partie 11 seront de préférence réalisés en une seule pièce comme c'est le cas sur les figures, où le manche 10 sera rapporté.

La partie 11 possède une forme cylindrique et son extrémité de travail 11' est biseautée soit obliquement (figure 1a) ou de façon plus ou moins arrondie (figure 1B et figure 1C) ou droite. On peut voir également sur les figures 1C et 1D que la partie 11 peut également être biseautée longitudinalement de manière à former deux faces 13,13' adjacentes, formant un certain angle entre elles et légèrement incurvées.

La partie de travail 11 peut ainsi présenter des formes diverses pour pouvoir pénétrer des espaces interdentaires différents, et notamment des espaces très réduits, ainsi que pour pouvoir nettoyer et polir les dents en effectuant avec le bâtonnet un mouvement d'avant en arrière et de haut en bas au contact des surfaces à nettoyer.

Le polissage des dents est rendu possible grâce à la structure particulière 2 du bâtonnet 11 qui lui procure, tout au long des opérations de polissage, un pouvoir abrasif se renouvelant constamment, laquelle structure 2 est constituée, comme on peut le voir sur la figure 2, de fibres abrasives 20, formant chacune une lime, enrobées dans une matrice résineuse 21 réalisée à base d'une résine de préférence époxy.

Dans un mode de réalisation particulièrement préféré, l'instrument ou polissoir est constitué de fibres 20 en verre enrichi à l'oxyde de zirconium, noyées dans une matrice de résine. Les fibres 20 en verre enrichi en oxyde de zirconium sont des fibres fabriquées à partir d'un verre qui lui-même a été fabriqué par fusion des poudres de départ parmi lesquelles l'oxyde de zirconium ou un précurseur d'oxyde de zirconium, remplace et se substitue à une partie des autres constituants habituels du verre aussi bien avant qu'après la fusion. Pour utilisation dans l'invention, le verre, à partir duquel les fibres 20 sont fabriquées, contient de préférence entre 15 et 20 % en poids d'oxyde de zirconium, par rapport au poids total des constituants du verre et plus particulièrement entre 16,8 et 17,1 % en poids d'oxyde de zirconium par rapport au poids total des constituants du verre. A partir de ce verre, des fibres en verre sont filées, puis enrobées dans une matrice de résine. On procède à la mise en forme de l'instrument ou polissoir de l'invention et, comme déjà décrit, l'extrémité de travail 11' est biseautée soit obliquement ou de façon plus ou moins arrondie soit longitudinalement de manière à former deux faces 13, 13' adjacentes, formant un certain angle entre elles et légèrement incurvé.

Ce polissoir contenant des fibres en verre enrichi en oxyde de zirconium présente de nombreux avantages.

Tout d'abord, les fibres 20 en verre enrichi en oxyde de zirconium sont résistantes aux agents acides et alcalins. Or, la bouche est un milieu qui peut être alternativement acide et alcalin. Ainsi, les fibres 20 en verre enrichi en oxyde de zirconium, contrairement aux fibres de verre classique non enrichi en oxyde de zirconium, ne sont pas attaquées lors de leur utilisation dans la bouche et ne créent pas de résidus qui pourraient être nocifs.

De plus, les fibres 20 en verre enrichi en oxyde de zirconium sont radio-opaques et ainsi rendent l'instrument ou polissoir de l'invention détectable aux rayons X ce qui permet de le localiser en cas d'ingestion accidentelle.

Mais surtout, contrairement aux fibres en verre classique qui se défont en petites fibrilles et donc se disséminent de façon envahissante lors de leur utilisation comme polissoir, dans la bouche, les fibres en verre enrichi en oxyde de zirconium ne se défont pas en de telles fibrilles.

En effet, un instrument ou polissoir dentaire réalisé en fibres de verre classique c'est-à-dire non enrichi en oxyde de zirconium se délite en petites fibrilles qui sont irritantes et donc dangereuses pour les muqueuses et les parties molles de l'utilisateur et ce d'autant plus si elles sont ingérées: L'utilisateur, en utilisant un polissoir constitué de telles fibres en verre classique a la bouche remplie de telles fibrilles, ce qui est particulièrement dangereux et désagréable à l'emploi. En contraste, le polissoir réalisé à partir de fibres en verre enrichi en oxyde de zirconium ne présente pas ces incovénients.

Dans un second mode de réalisation particulièrement préféré de l'invention, le polissoir ou instrument est constitué de fibres d'aramide telles que des fibres de Kevlar® noyées dans une matrice de résine. Les fibres d'aramide sont particulièrement avantageuses car lors de leur mise en forme par usinage, elles forment des filaments qui ne se détachent pas complètement de la partie meulée. Ce comportement est généralement considéré comme un inconvénient de ces fibres mais, dans le cas du polissoir de l'invention, ceci est un avantage.

En effet, lors de la réalisation de l'extrémité de travail 11' biseautée du polissoir de l'invention, ce comportement permet de créer une surface de l'extrémité de travail 11' ayant une texture de feutre, et cela est particulièrement avantageux dans le cas d'un polissoir.

Cependant, les fibres d'aramide n'ont pas de fonction polissante. Elles ont ici la fonction de créer le squelette rigide du polissoir de l'invention et également de créer une surface de l'extrémité de travail 11' ayant une texture de feutre. Il faut donc alors ajouter des poudres abrasives dans la matrice de résine du polissoir de l'invention. Des poudres abrasives préférées dans ce but sont des poudres d'oxyde d'étain ou d'oxyde de cérium ou d'alumine et leurs mélanges.

Alors que le polissoir selon le premier mode de réalisation préféré de l'invention dans lequel les fibres 20 sont des fibres en verre enrichi en oxyde de zirconium est plus particulièrement destiné à un usage domestique, par le particulier, le polissoir de l'invention selon le second mode de réalisation dans lequel les fibres 20 sont des fibres d'aramide et dans lequel la matrice de résine contient des agents abrasifs tels que l'oxyde d'étain, l'oxyde de cérium et l'alumine, est plus particulièrement destiné à un usage par un professionnel. En effet, il peut être utilisé non seulement manuellement, mais également fixé sur un appareil permettant de le mettre en rotation ou en vibration.

Dans tous les cas, le taux de fibres 20 est avantageusement de 45 à 65 % en volume, pour obtenir un bon pouvoir polissant, et les fibres ont de préférence un diamètre compris entre 2 et 25 microns, de préférence de 2 microns.

Les fibres 20 sont des fibres continues enrobées dans un matériau de résine qui ne produisent pas de particules qui pourraient se disséminer dans la cavité buccale.

Un autre avantage commun des polissoirs selon l'invention est qu'ils sont utilisables non seulement pour polir les dents naturelles mais également les matériaux composites d'obturation dentaire, utilisés en tant que matériau de comblement ou en tant que matériau de prothèse dentaire.

En particulier, le polissoir selon le premier mode de réalisation préférée de l'invention dans lequel les fibres 20 sont des fibres en verre enrichi en oxyde de zirconium peut être utilisé pour la mise en forme et l'obtention d'une surface lisse et appropriée du matériau composite dentaire. Le composite dentaire après un polissage avec un tel polissoir a cependant un aspect mat et doit donc ensuite être rendu brillant par un polissage plus fin. Cela est avantageusement obtenu en utilisant le polissoir selon le second mode de réalisation préféré de l'invention dans lequel les fibres 20 sont des fibres d'aramide, de préférence placé sur un dispositif mettant le polissoir de l'invention en rotation ou en vibration. Cette finition permet d'atteindre un aspect brillant très proche, si ce n'est identique, de celui de l'émail dentaire naturel.

Il est à noter que lorsque le polissoir selon le premier mode de réalisation préféré de l'invention dans lequel les fibres 20 sont des fibres en verre enrichi en oxyde de zirconium est utilisé sur la dent naturelle, celle-ci conserve son aspect brillant.

Ainsi, l'instrument ou polissoir selon la présente invention permet de nettoyer et de polir le tissu dentaire, en respectant la dent, et de nettoyer et de polir les parties en matériaux composites de restauration dentaire et, de par son caractère biocompatible, est particulièrement adapté au condition requise pour son utilisation dans la cavité buccale.

Enfin, son pouvoir abrasif peut être choisi et déterminé selon les besoins en agissant sur la nature de chacun de ses constituants, à savoir les fibres et/ou les particules contenues dans la matrice de résine.

L'action abrasive est donnée par l'extrémité de travail 11' des fibres 20 et se renouvelle donc au fur et à mesure de l'usure de l'instrument ou polissoir.

## Revendications

1. Instrument d'hygiène pour le nettoyage et le polissage de la surface des dents et des matériaux composites d'obturation dentaire du type se présentant sous la forme d'un bâtonnet (1) dont la structure (2) est réalisée à partir de fibres (20) enrobées dans une matrice de résine (21), **caractérisé en ce que** les fibres (20) sont des fibres en verre enrichi en oxyde de zirconium.

2. Instrument selon la revendication 1, **caractérisé en ce que** la matrice de résine (21) contient de plus une charge de particules.

3. Instrument selon l'une quelconque des revendications précédentes, **caractérisé en ce que** les fibres (20) sont des fibres en verre qui contient entre 15 et 20 % en poids d'oxyde de zirconium, par rapport au poids total des constituants du verre.

4. Instrument selon l'une quelconque des revendications précédentes, **caractérisé en ce que** les fibres (20) sont des fibres en verre qui contient entre 16,8 et 17,1 % en poids d'oxyde de zirconium, par rapport au poids total des constituants du verre.

5. Instrument selon l'une quelconque des revendications précédentes, **caractérisé en ce que** la matrice de résine est une matrice de de polymères thermodurcissables ou thermoplastiques.

6. Instrument selon l'une quelconque des revendications précédentes, **caractérisé en ce que** le bâtonnet (1) présente une forme cylindrique dont l'extrémité (11') est biseautée.

7. Instrument selon l'une quelconque des revendications précédentes **caractérisé en ce qu'**il est biseauté longitudinalement de manière à présenter deux faces adjacentes longitudinales et faisant un certain angle entre elles.

8. Instrument selon l'une quelconques des revendications précédentes, **caractérisé en ce qu'**il comporte un manche (10) rapporté ou réalisé en une seule pièce avec le bâtonnet (1).

## Patentansprüche

1. Hygienewerkzeug zum Reinigen und Polieren der Oberfläche der Zähne und der Verbundwerkstoffe für Zahnfüllungen von jenem Typ, der die Form eines Stiftes (1) aufweist, dessen Struktur (2) ausgehend von Fasern (20) hergestellt ist, die in einer Harzmatrize (21) eingebettet sind, **dadurch gekennzeichnet, daß** die Fasern (20) Zirkoniumoxid angereicherte Glasfasern sind.

2. Werkzeug nach Anspruch 1, **dadurch gekennzeichnet, daß** die Harzmatrize (21) ferner eine Ladung Partikel enthält.

3. Werkzeug nach einem der vorhergehenden Ansprüche, **dadurch gekennzeichnet, daß** die Fasern (20) Fasern aus Glas sind, das zwischen 15 und 20 Gew.% Zirkoniumoxid in Bezug auf das Gesamtgewicht der Glasbestandteile enthält.

4. Werkzeug nach einem der vorhergehenden Ansprüche, **dadurch gekennzeichnet, daß** die Fasern (20) Fasern aus Glas sind, das zwischen 16,8 und 17,1 Gew.% Zirkoniumoxid in Bezug auf das Gesamtgewicht der Glasbestandteile enthält.

5. Werkzeug nach einem der vorhergehenden Ansprüche, **dadurch gekennzeichnet, daß** die Harzmatrize eine Matrize aus duroplastischen oder thermoplastischen Polymeren ist.

6. Werkzeug nach einem der vorhergehenden Ansprüche, **dadurch gekennzeichnet, daß** der Stift (1) eine zylindrische Form aufweist, deren Ende (11') angefast ist.

7. Werkzeug nach einem der vorhergehenden Ansprüche, **dadurch gekennzeichnet, daß** es längsseitig derart angefast ist, daß es zwei benachbarte längliche Flächen aufweist und einen bestimmten Winkel zwischen diesen bildet.

8. Werkzeug nach einem der vorhergehenden Ansprüche, **dadurch gekennzeichnet, daß** es einen hinzugefügten oder mit dem Stift (1) einstückig ausgeführten Griff (10) umfaßt.

## Claims

1. A hygiene instrument for cleaning and polishing the surface of teeth and of composite materials for dental filling, the instrument being of the type that is in the form of a stick (1) the structure (2) of which is made from fibers (20) embedded in a resin matrix (21), **characterized in that** the fibers (20) are fibers of glass enriched with zirconium oxide.

2. The instrument according to claim 1, **characterized in that** the resin matrix (21) further includes a filler of particles.

3. The instrument according to any one of the preceding claims, **characterized in that** the fibers (20) are fibers made of a glass which contains between 15 and 20 weight% of zirconium oxide, as compared to the total weight of the constituents of the glass.

4. The instrument according to any one of the preceding claims, **characterized in that** the fibers (20) are fibers made of a glass which contains between 16.8 and 17.1 weight% of zirconium oxide, based on the total weight of the constituents of the glass.

5. The instrument according to any one of the preceding claims, **characterized in that** the resin matrix is made from thermosetting or thermoplastic polymer resins.

6. The instrument according to any one of the preceding claims, **characterized in that** the stick (1) is cylindrical in shape, an end (11') of which is chamfered.

7. The instrument according to any one of the preceding claims, **characterized in that** it is chamfered longitudinally so as to present two adjacent longitudinal faces at a certain angle to each other.

8. The instrument according to any one of the preceding claims, **characterized in that** it has a handle (10) fitted thereto or formed integrally with the stick (1).
